Europäisches Patentamt

European Patent Office

Office européen des brevets

(11) Publication number: **0 251 344 B1**

# EUROPEAN PATENT SPECIFICATION

(45) Date of publication of patent specification: **16.09.92** (51) Int. Cl.⁵: **G11B 23/113**

(21) Application number: **87200214.2**

(22) Date of filing: **10.10.84**

(60) Publication number of the earlier application in accordance with Art.76 EPC: **0 152 641**

(54) **Method of filling cassette with a length of magnetic tape and apparatus for carrying out the method.**

(30) Priority: **17.10.83 NL 8303566**

(43) Date of publication of application:
**07.01.88 Bulletin 88/01**

(45) Publication of the grant of the patent:
**16.09.92 Bulletin 92/38**

(84) Designated Contracting States:
**CH DE FR GB IT LI NL SE**

(56) References cited:
WO-A-84/01563          FR-A- 2 126 814
FR-A- 2 343 309          GB-A- 2 093 801
GB-A- 2 107 075          JP-A-59 132 468
US-A- 3 637 153          US-A- 3 814 343

PATENT ABSTRACTS OF JAPAN, vol. 8, no.
144 (P-284)[1581], 5th July 1984; & JP-A-59 42
674 (HITACHI MAXELL K.K.) 09-03-1984

(73) Proprietor: **N.V. Philips' Gloeilampenfabrieken**
**Groenewoudseweg 1**
**NL-5621 BA Eindhoven(NL)**

(72) Inventor: **Kreeft, Hendrik Klaas**
**c/o INT. OCTROOIBUREAU B.V. Prof. Holst-**
**laan 6**
**NL-5656 AA Eindhoven(NL)**
Inventor: **Teunissen, Adrianus Franciscus**
**c/o INT. OCTROOIBUREAU B.V. Prof. Holst-**
**laan 6**
**NL-5656 AA Eindhoven(NL)**

(74) Representative: **Smit, Frederik Jan et al**
**INTERNATIONAAL OCTROOIBUREAU B.V.**
**Prof. Holstlaan 6**
**NL-5656 AA Eindhoven(NL)**

# Description

The invention relates to a method of filling a cassette (34) with a length of magnetic tape, comprising the following steps positioning a leading end of the magnetic tape on a second vacuum pad of a splicing table, inserting a cassette into a holder, said cassette having two hubs arranged therein and having a length of leader tape extending between said hubs within the cassette, withdrawing said length of leader tape out of the cassette by an extraction member, positioning said length of leader tape on a first and third vacuum pad of the splicing table, which first vacuum pad is arranged on a stationary first block of the splicing table and which third vacuum pad is in line with the first vacuum pad and is together with the second vacuum pad arranged on a second block of the splicing table, which second block is movable to bring the second and the third vacuum pad alternatively into line with the first vacuum pad, cutting said leader tape on the splicing table into first and second leader tape parts, moving the second block to bring the second vacuum pad into line with the first vacuum pad, splicing said first leader tape part to the leading end of the magnetic tape to be wound into the cassette, moving a tape guide from a rest position free of contact with the tape to an operating position for contacting the tape, winding said first leader tape part and a length of said magnetic tape, via said tape guide, onto a take-up hub inside the cassette, terminating winding after said magnetic tape has been wound to a location defining a trailing end, cutting said magnetic tape at a selected point so as to form said trailing end, moving the second block to bring the third vacuum pad into line with the first vacuum pad, splicing said trailing end to said second leader tape part, winding said trailing end and said second leader tape part into the cassette, and discharging said cassette from said holder.

Such a method is known from US-A-3.814.343. This known method uses the alternation principle for cutting and splicing the leader tape and the magnetic tape by bringing the second and third vacuum pad alternately into line with the first vacuum pad. In this method a comparatively large length of leader tape is withdrawn from the cassette and positioned on the splicing table. Since the splicing table is positioned with respect to the cassette holder at a comparatively long distance to provide at least enough clearance above the splicing table for the punch of the splicing member, this method is not suitable for handling cassettes with a comparatively short length of leader tape, such as the recently developed 8-mm video cassette.

Further the known method includes the step of moving a tape guide from arrest position to a tape guiding position. In the operating position the tape guide is located in the tape path between a supply reel of magnetic tape and an entrance passage of a cassette housing. This known method relates to filling cassettes of the so-called "Compact-Cassette" type, in which cassettes the tape as it enters the cassette housing is always guided by house parts including a wall portion and a guide roller regardless the location of the tape guide in its operating position relative to the entrance passage.

A recently developed magnetic-tape cassette, which is known from GB-A-2.116.520, is not equipped with internal tape-guiding means which are disposed behind the entrance passage of the tape and which can guide the tape in the correct direction towards the take-up reel hub. Filling such a new cassette with tape requires that during tape winding the tape guidance is effectively adapted, inter alia to prevent contact of the tape with parts of the cassette housing.

The method, known from the aforesaid US-A-3,814,343, is performed by means of an apparatus which, due to the construction of various components of this apparatus, is not suitable for filling such new cassettes with an effective tape guidance.

It is the object of the invention to improve a method of the type specified in such a manner that cassettes with a short leader tape can be handled, that during tape winding the tape guidance towards the take-up hub is determined solely by the tape guide and that tape winding can be performed within a comparatively short time.

To this end the invention is characterized in that moving the second lock is realised by pivoting the second block about a pivotal axis of the second block, in that the method further includes the steps of pivoting the holder with the cassette from a second or splicing position, in which the holder is inclined relative to the splicing table, about a pivotal axis to a first position straight above the splicing table, which pivotal axis is disposed at least substantially in a plane containing both the pivotal axis of the second block and the central longitudinal axis of the first vacuum pad and the pivotal axis of the holder extends at least substantially parallel to the pivotal axis of the second block between the last-mentioned axis and the surface of the first vacuum pad, in that the method further includes the steps of pivoting the holder from said first position to said second position before one of the steps of cutting and splicing is performed, and in that said operating position the tape guide is aligned with respect to said cassette such that during the subsequent winding step said tape after leaving said tape guide is fed directly to said take-up hub within the cassette but without coming into contact with other parts of the cassette and in that in its operating position during winding the tape guide keeps the tape aligned relative to a plane of symmetry of the cassette take-up hub. The pivotal movements of the holder are accurate and easy to effect owing to the comparatively small tolerances of the pivotal parts. The ends of the leader tape remain in the correct position on the splicing table during the movements of the holder. In this way the pivotal arrangement of the cassette holder with the said location of the pivotal axis of the holder enables the distance between the splicing table and a cassette contained in the holder to be minimized and thereby allows cassettes with a comparatively short length of leader tape, such as the afore-mentioned 8-mm video cassette, to be handled.

Further this new method ensures that during the winding step the tape, throughout the transfer from the tape guide to the reel hub, travels without either side of the tape touching other parts of the cassette, so that the tape remains aligned correctly relative to the take-up hub and that the tape pack is located substantially in the plane of symmetry of the take-up hub, thus precluding undesired effects.

With a tape guidance of this kind, the tape is wound uniformly around the take-up hub and a uniform flat tape pack is obtained. The tape winding speed can be rather high, thus ensuring a minimal processing time of the cassette to be filled. The special positioning of the tape guide is of particular importance in filling cassettes of the above-mentioned type, which are not equipped with internal tape guiding means, such as the recently developed 8 mm-video cassette.

A preferred method in accordance with the invention is characterized in that the cassette has a front cover system and a passage behind said front-cover system, in that after opening the front cover system the tape guide is positioned inside said passage by pivoting the holder from the second position to the first position before the step of moving the tape guide from said rest position to said operating position is performed. Thus, by pivoting the holder to the first position the tape guide is positioned automatically inside the passage of the cassette.

A further preferred method in accordance with the invention is characterized in that after the step of pivoting the holder from the second position to the first position said tape guide is pivoted freely inside said passage from said rest position to said operating position for contacting the tape. The pivotal movement of the tape guide ensures that this tape guide does not form an obstruction during the step of withdrawing the leader tape and positioning the leader tape on the splicing table. The free movement of the tape guide inside the passage ensures that the guide does not influence the position of the cassette.

Another preferred method in accordance with the invention is characterized in that the extraction member comprises pull-out pins which are positioned initially inside said passage when the holder is pivoted to the first position, in that during the step of withdrawing the leader tape is withdrawn from the cassette by said pull-out pins until the ends of the leader tape on the hubs are reached, in which position said pins are disposed one to each side of the splicing table, said pins enabling the leader tape to be positioned on the splicing table and subsequently to be cut into two parts having substantially the same length. In this respect a further preferred method is characterized in that it further includes the step of moving said tape guide from said operating position to said rest position after said magnetic tape has been wound to said trailing end, and of moving said pull-out pins with the tape towards the splicing table to position the magnetic tape on the splicing table. This enables the leader tape to be cut into two leader tape parts of equal length, which is of particular importance for cassettes, such as the afore mentioned 8 mm video cassette, where such equal lengths are prescriptive. By pivoting the tape guide to its rest position, the tape guide does not obstruct the movement of the pull-out pins.

The invention further relates to an apparatus for carrying out such method. Such an apparatus is known from the aforesaid US-A-3,814,343. According to the invention an embodiment of the apparatus is characterized in that the second block is pivotable about a pivotal axis of the second block, in that the holder with the cassette is pivotable about a pivotal axis from a second or splicing position, in which the holder is inclined relative to the splicing table to a first position straight above the splicing table, which pivotal axis is disposed at least substantially in a plane containing both the pivotal axis of the second block and the central longitudinal axis of the first vacuum pad and the pivotal axis of the holder extends at least substantially parallel to the pivotal axis of the second block between the last-mentioned axis and the surface of the first vacuum pad, and in that said tape guide is movable from said rest to said operating position so as to align a guide portion of the tape guide in its operating position with respect to the take-up hub of the cassette. This ensures that upon leaving the guide portion the magnetic tape is aligned correctly relative to the take-up hub during winding.

Another embodiment of the apparatus in accordance with the invention is characterized in that the tape guide is pivotable between said rest and operating positions and is semi-circular in radial cross-section. The semi-circular cross-section of the tape guide and its pivotable arrangement have the advantage that the tape guide can move freely inside a comparatively narrow passage of the cassette. In this respect a further embodiment of the apparatus is characterized in that the tape guide comprises a portion provided with a recess for receiving a part of the cassette, said recessed portion adjoining said guide portion. Thus, when turning towards the operating position, the tape guide cannot run against the cassette housing.

Another embodiment of the apparatus in accordance with the invention is characterized in that the cassette holder comprises positioning means for positioning the cassette in the holder, which positioning means comprise pressure elements which urge a supporting surface of the cassette against supporting members of the holder, and locating pins which position the cassette in the holder. This ensures that the position of the cassette in the holder and thus to the tape guide is defined accurately.

In this respect a further embodiment of the apparatus is characterized in that the cassette holder is movable between a first or winding position and a second or splicing position and in that adjustment means are provided to adjust the cassette holder and the cassette in the first or winding position relative to the tape guide. Thus, it is ensured that during winding the take-up reel hub is positioned accurately relative to the tape guide.

An embodiment of the invention will now be described in more detail, by way of example, with reference to the drawings. In the drawings:

Figure 1 is a perspective front view of an embodiment of the apparatus in accordance with the invention;

Figure 2 is an enlarged front perspective view, partly in section, of a part of the apparatus shown in Figure 1;

Figure 3 shows schematically two positions of the cassette holder of the apparatus shown in Figures 1 and 2;

Figure 4 illustrates schematically a number of situations on the splicing table; and

Figures 5A and 5B are perspective views of parts of the apparatus of Figures 1 and 2, showing two positions of the alignment pin.

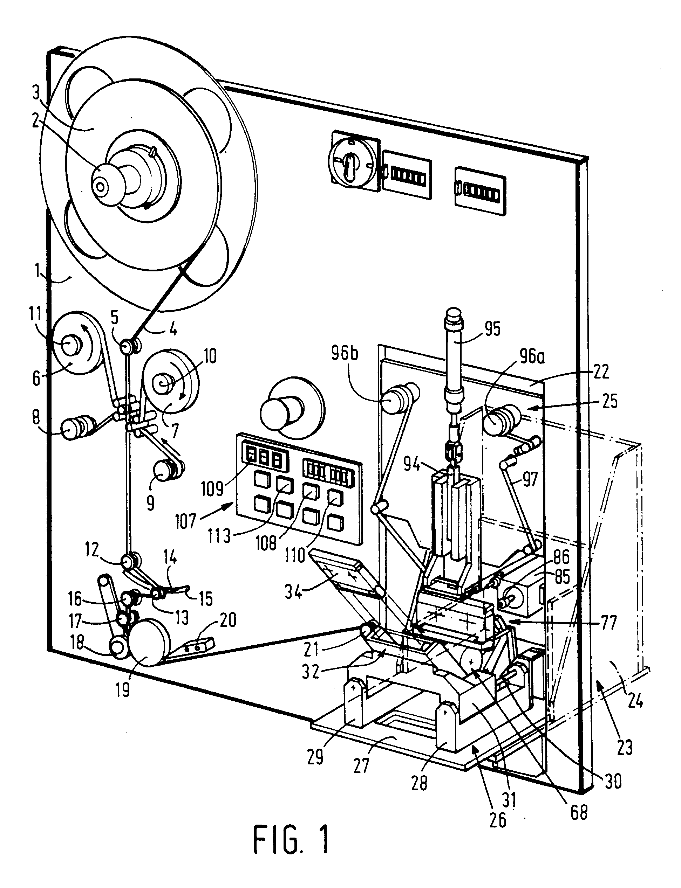

The apparatus shown in Figure 1 comprises a front plate 1, in which a spindle 2 is journalled. The spindle 2 carried a tape reel 3. The reel 3 contains a magnetic tape 4. The magnetic tape 4 is guided past a guide roller 5 and subsequently passes between two lengths of cleaning tape 6 and 7. The cleaning tape 6 and 7 is led from reels 8 and 9 to take-up reels 10 and 11 in a direction opposite to the direction of transport of the magnetic tape 4. Subsequently, the magnetic tape 4 is guided past a guide roller 12 and round a pulley 13 arranged on a control arm 14, which control arm 14 extends from behind the front plate 1 through a slot 15 in the plate and is spring-biased to the right in Figure 1. The magnetic tape 4 is then led past a guide roller 16 and an alignment roller 17. After this the magnetic tape is pressed against a capstan 19 by a pressure roller 18. After leaving the capstan 19 the tape 4 is led past a tape scraper 20 which detaches the tape from the capstan if it adheres to the capstan 19 as a result of static charges. After the scraper 20 the magnetic tape 4 is fed past a guide roller 21.

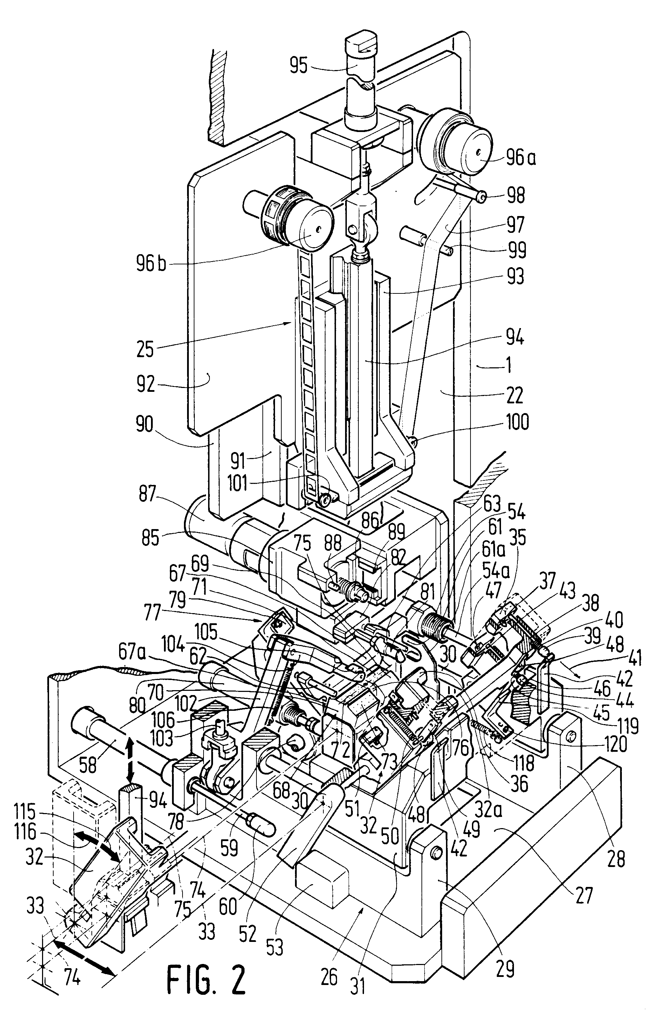

The front plate 1 has a rectangular opening 22 in which a cutting/splicing roller unit 23 is situated. The unit 23 is accommodated in an outer casing 24 which is secured to the front plate 1. A splicing device 25 is rigidly connected to the outer casing. The outer casing 24 also accommodates a unit 26 which is interchangeable. The unit 26 can be slid out through the front opening 22, for example in the event of faults or for maintenance purposes. The unit 26 comprises a frame 27, to which two guide blocks 28 and 29 are secured. The guide blocks 28 and 29 carry guide rods 30 (see Figure 2), which provide a straight-line guidance for a slide 31. The slide 31 comprises two pivots by means of which a cassette holder 32 is pivotable relative to the slide 31 about a pivotal axis 33. The cassette holder 32 is open at the top, so that a cassette 34 can be lowered into the holder 32. (See Figure 1). In Figure 1 the cassette 34 is shown transferred to another position, namely, the winding position. The cassette holder 32 is of substantially U-shaped cross-section and comprises inwardly flanged supporting members 35 and 36 (see Figure 2) at both sides of the cassette. Centring pins 37 on the flanges of the members 35 and 36 project into the interior of the cassette holder 32. The centring pins 37 are each connected to an actuating rod 38 which is formed integrally with a projection 39 at the front of the cassette holder 32. A compression spring 40 is arranged around the actuating rod 38, thereby urging the rod 38 in the direction indicated by the arrow 41. In the initial position of the cassette holder, which position is shown in Figure 1, the projections 39 are urged against unlocking strips 42 arranged on the slide 31. In a similar way an actuating rod 43 is arranged in the supporting member 35, which rod has a projection 44 which is urged against a seat 46 on the slide 31 by a compression spring 45. The end of the rod 43 is connected to an unlocking element 47. Two pressure elements in the form of rollers 48 are arranged in the bottom of the cassette holder 32. The rollers 48 are carried by pivotable arms 49 which are biased by tension springs 50 in such a manner that the rollers 48 are pulled towards the interior of the cassette holder 32. The cassette holder 32 also comprises a stop 51 which limits the depth to which a cassette can be inserted into the holder 32. When the holder has been pivoted slightly in a manner to be described hereinafter, a cassette 34 in the holder 32 is positioned by means of the centring pins 37. The pins 37, engage in centring holes, not shown, in a supporting surface of the cassette. In this way the cassette is positioned in a plane parallel to the base 32a of the holder 32. Due to the action of the spring-loaded rollers 48 the afore-mentioned supporting surface of the cassette is urged agsinst the supporting members 35 and 36. In this way the cassette is positioned in a direction perpendicular to the base 32a of the U-section holder. This ensures that the position of the cassette in the holder 32 is defined accurately in three dimensions.

The pivotal movement of the holder 32 is obtained by means of a lever 52 which, viewed in Figure 2, is situated to the left of the guide block 29. The lever 52 extends, downwardly from the pivotal axis 33 towards the frame 27 and in the position shown in Figure 2 it engages with a block 53. This is achieved by means of a pneumatic cylinder 54, whose piston rod 54a is connected to the slide 31. The cylinder 54 is capable of moving the slide 31 to the right in Figure 2, so that as a result of the engagement of the lever 52 with the block 53 the cassette holder 32 is pivoted to leave the actuating rods 38 and 43 in an initial position relative to the supporting members 35 and 36 of the cassette holder, in which the centring pins 37 and the unlocking element 47 are retracted from the interior of the holder 32.

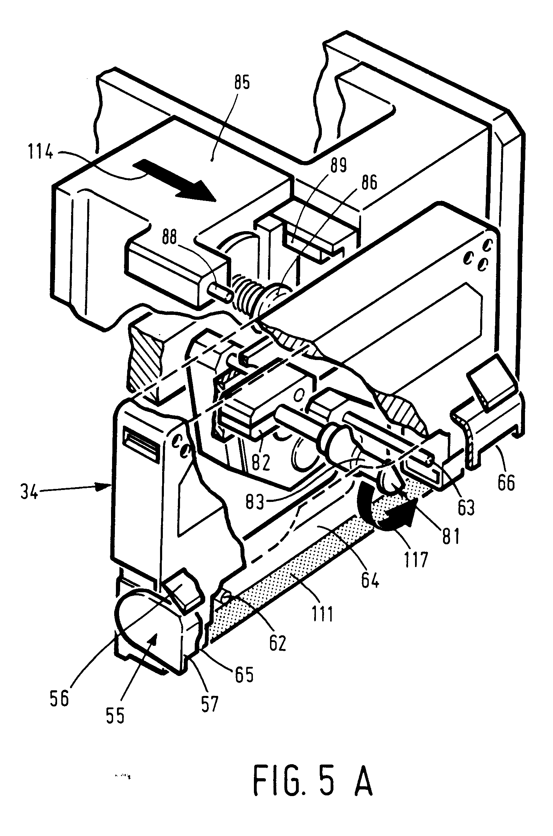

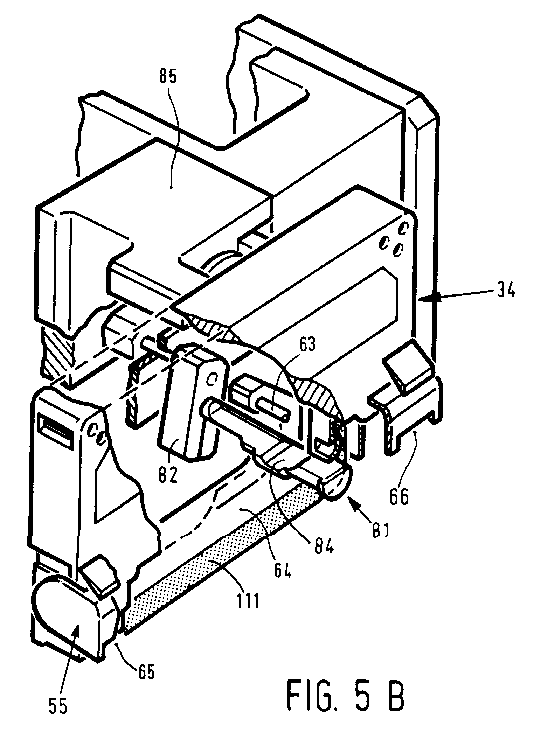

If the cylinder 54 acts in the other direction, moving the slide 31 to the left in Fig. 2, the spring 40 and the spring 45 cause the holder 32 to pivot slightly while the end of the lever 52 remains in contact with the block 53. During further movement of the slide 31 to the left, the cassette holder 32 being pivoted slightly further, the lever 52 moves now against an actuator 60, carried by a piston rod 59 of a pneumatic cylinder 58. The actuator 60 now further pivots the cassette holder 32 via the lever 52, bringing the cassette holder 32 into the vertical position relative to the frame 27. During this further pivoting of the holder 32, the spring 45 now actuates the unlocking element 47 actuating a latch, not shown, of the magnetic-tape cassette 34. This latch locks a system 55 of front covers of the magnetic-tape cassette, which system comprises an inner cover 56 and an outer cover 57 (see Figure 5). The latch is now unlocked by the element 47. The cylinder 54 is more powerful than the cylinder 58, so that the piston rod 54a can now move the cassette holder 32 in the vertical position to the left in Figure 2. As a result of this movement, which is a straight-line movement, the front-cover system 55 abuts an oblique upwardly directed guide portion 61a of a skate 61, the inner cover 56 and the outer cover 57 assuming the position shown in Figure 5. At the end of the movement the cassette holder 32 assumes the position indicated by the broken lines in Figure 2 (see left-hand side of Figure 2). This is the winding position of the cassette holder 32. In this position two pull-out pins 62 and 63 project into an opening 64 in the cassette behind the front-cover system 55 (see Figure 5). The pins are then disposed substantially symmetrically with respect to the plane of symmetry (not shown) of the cassette which passes through the midpoint in the length of the cassette at equal distances from reels 112 of the cassette. Moreover, the pins are situated near the front openings 65 and 66 of the cassette which are located near the side walls of the cassette. The pull-out pins 62 and 63 are arranged on a yoke 67 which is actuated by a pneumatic cylinder, not shown, which is capable of performing an upward and downward movement. Compression springs 67a urge the yoke in the upward direction.

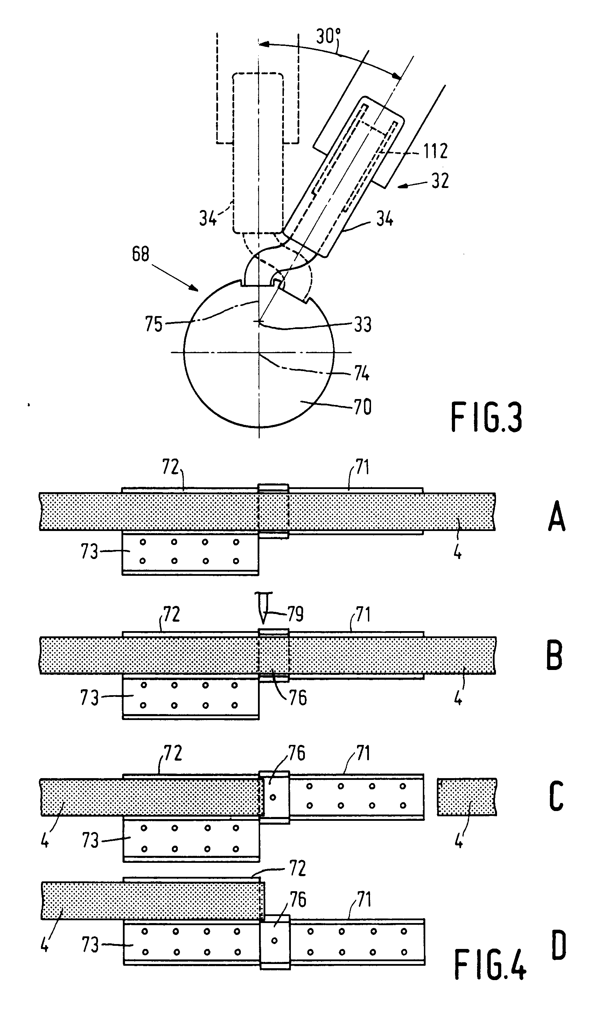

The frame 27 further carries a splicing table 68 comprising a first, stationary block 69 and a second, pivotal block 70. The first block 69 comprises a first vacuum pad 71 of the splicing table and the second block 70 comprises a second vacuum pad 72 and a third vacuum pad 73 all three pads being of elongate rectangular form. A plurality of vacuum ducts terminate in the vacuum pads and, in a manner not shown, they are connected to a vacuum line via a value. The block 70 is pivotable about a pivotal axis 74 extending parallel to the plane of symmetry of the first vacuum pad 71 which contains the central longitudinal axis of this pad which is indicated by the broken line 75 in Figure 2. The upper surfaces of the vacuum pads 72 and 73 extend tangentially with respect to the pivotal axis 74. In a manner to be described hereinafter the vacuum pads 72 and 73 can be brought alternately into line with the vacuum pad 71. The first block 69 further comprises an anvil 76, in which another vacuum duct terminates. A cutting device 77 is connected to the frame 27 so as to be pivotable about a spindle 78 and comprises a cutter 79 which after a pivotal movement about the spindle 78 can move towards the anvil 76 from the left to the right in Figure 2. The cutter 79 is actuated by a pneumatic cylinder, not shown. The second block 70 can be pivoted about the pivotal axis 74 by means of a pneumatic cylinder 80. The resulting positions of the vacuum pads 72 and 73 are shown in Figure 4.

The frame 27 further carries an alignment pin 81 (see also Figure 5), which is arranged on a pivotal lever 82 for movement between an operating position and a rest position by a pneumatic cylinder, not shown. Figure 5a shows the rest position and Figure 5b shows the operating position of the alignment pin 81. The alignment pin 81 is of semicircular cross-section and comprises a guide portion 83. The guide portion 83 is disposed symmetrically with respect to the aforementioned plane of symmetry 75 through the first vacuum pad 71. Adjoining the guide portion 83 the alignment pin has a recess 84 which, as is shown in Figure 5b, can receive a part of the cassette housing so that the alignment pin 81, as it turns towards the operating position cannot run against the cassette housing.

Above the alignment pin a housing 85 is arranged so as to be slidable in a direction perpendicular to the plane of symmetry 75, which housing carries a winding device comprising a winding mandril 86 which is driven by means of a motor 87. The housing 85 further carries a brake-release pin 88, which in a manner not shown can cooperate with the latching means of a braking mechanism, not shown, in the cassette. When the housing 85 moves in the forward direction the pin 88 releases the braking mechanism of the cassette, thereby releasing the reels 112 of the cassette. The housing 85 is guided on a rail 89 on the frame 27 and is moved by means of a pneumatic cylinder, not shown.

On the outer casing 24 a gusset 90 is arranged which carried a guide 91. The guide 91 guides a mounting plate 92 in upward and downward direction parallel to the plane of symmetry 75. A punch 94 is guided in upward and downward directions by a guide 93 on the mounting plate 92. In a manner not shown the punch 94 comprises a longitudinal vacuum duct which in a manner to be described hereinafter serves to retain an adhesive-tape portion. In a manner not shown this vacuum duct is connected to a vacuum value and a vacuum line. At its upper end the punch 94 is connected to the piston rod of a pneumatic cylinder 95 to be moved up and down thereby. Two rollers 96a and 96b are mounted for rotation on the mounting plate 92. The left-hand roller 96b in Figure 2 is driven during operation of the splicing device 25. Behind the right-hand roller 96a is a friction plate, not shown, which brakes this roller. The right-hand roller 96a carries a quantity of adhesive tape 97, which is led from the roller 96a around a tensioning roller 98. A lever, not shown, is provided at the back side of the mounting plate 92, carrying the tensioning roller 98, which lever can be pivoted about an axis, coinciding with the axis of rotation of the roller 96a. From the tensioning roller 98 and adhesive tape 97 passes over a spindle 99, the tensioning roller 98 ensuring that the adhesive tape 97 is sufficiently taut. In this way it is achieved that the spindle 99 is rotated by the adhesive tape 97, which rotation is measured in a manner not shown. Thus, the length of adhesive tape supplied by the roller 96a is measured. From the spindle 99 the adhesive tape 97 passes round a guide roller 100, moves horizontally underneath the punch 94, passes round a guide roller 101 and finally is taken up by the left-hand roller 96b. As can be seen from Figure 2, portions of adhesive tape 97 are punched out by the punch 94.

A lever 102 is pivotally arranged on the frame 27, which lever pivots about the end portion of the left-hand guide rod 30 in Figure 2, the lever 102 being actuated by a piston rod 103 of a pneumatic cylinder, not shown. To the end of the lever 102 which is remote from the rod 30 an arm 104 is pivotally connected, whose free end carries a pressure roller 105. Between the arm 104 and the lever 102 a tension spring 106 is arranged, which urges the arm 104 against a stop, not shown. When the roller 105 is moved across the splicing table 68 by means of the piston rod 103, it travels across the surfaces of the vacuum pads under the loading of the spring 106.

The apparatus described in the foregoing operates as follows. Firstly, a full tape reel 3, also referred to as a "pancake", is placed on the spindle 2. Subsequently, the magnetic tape 4 is threaded past the various guide rollers and between the pressure roller 18 and the capstan 19. The splicing table 68 now occupies the position shown in Figure 4A, the second vacuum pad 72 being disposed in line with the first vacuum pad 71. During the first operation a push-button 108 on a control panel 107 is depressed, so that the control electronics of the apparatus are switched on. Subsequently a display 109 on the panel 107 indicates whether the control electronics have detected any faults in the apparatus. If no such faults are detected a push button 110 is pressed which results in a length of tape 4 being supplied such that this tape can be positioned on the splicing table 68. By again pressing the button 110 the cutter 79 is actuated, so that the magnetic tape 4 is severed. This produces the situation shown in Figure 4B, after which the residual length of magnetic tape 4, shown on the right-hand side in Figure 4C, can be removed. The leading end of the magnetic tape 4 is now situated on the vacuum pad 72. The next operation is the insertion of a cassette 34 into the holder 32. This cassette contains a leader tape 111, see Figure 5, which in the cassette shown, which is of the so-called 8-mm video type, has a limited length. This length is approximately 160 mm in total, reckoned from the point of attachment to the two reels 112.

Subsequently, the operator presses a start button 113 on the panel 107. As a result of this the slide 31 is actuated by means of the cylinder 54. The holder 32 is then pivoted about the pivotal axis 33 under the influence of the cylinder 58, whose actuator 60 presses against the lever 52 (for this reference is made to the preceding part of the description). The movement of the slide 31 results in the cassette being positioned in the cassette holder 32 in the manner described hereinbefore, the latch of the front-cover system 55 being released by the unlocking element 47 and the inner cover 56 and the outer cover 57 being opened by the skate 61 owing to the abutment with the edge portion 61a. The holder 32 has now assumed the position indicated by the full lines. This is the winding position, in which the holder extends parallel to the front plate 1. In this position the pivotal axis 74 of the second block 70 is disposed below the pivotal axis 33 of the holder 32, the pivotal axis 33 being situated substantially halfway between the pivotal axis 74 and the upper surfaces of the vacuum pads 71 and 72. Preferably, the pivotal axis 33 is disposed in the plane 75 in this position of the holder 32. Subsequently the housing 85, which carries the winding mandril 86 and the brake-release pin 88, is moved forwards in the direction indicated by the arrow 114 in Figure 5a. During this operation the braking mechanism, not shown, of the cassette 34 is released. The reel 112 is then also positioned in the aforementioned plane 75, so that the plane of symmetry of the reel coincides with the plane 75, see Figure 3. After this the magnetic tape 4, disposed on the vacuum pad 72, is pivoted away in the anti-clockwise direction by a pivotal movement of the block 70 in the direction indicated in Figure 2. Thus, vacuum pad 73 is aligned with the vacuum pad 71, see Figure 40. The control electronics of the apparatus then ensure that the pull-out yoke 67 is moved in a downward direction, so that the pins 62 and 63 are moved downwards from the position shown in Figure 5a, the leader tape 111 being positioned on the splicing table 68 and being moved downwards by the pins 62 and 63 so far that it is almost completely withdrawn from the cassette, until the ends of the tape 111 on the reels 112 are reached. The leader tape 111 is now positioned on the vacuum pads 71 and 73. The control electronics then cause the pull-out yoke 67 to move back in the upward direction, so that the pins 62 and 63 again assume a rest position in the opening 64 in the cassette. The housing 85 is now moved back, so that the brake-release pin 88 and the winding mandril 86 are withdrawn from the cassette 34. In the next step the cassette holder 32 is pivoted from the position indicated by the broken lines in Figures 2 and 3 in the direction indicated by the arrow 115 through an arc of approximately 30°, namely to the position indicated by the full lines in Figure 2. After this the cutter 79 severs the leader tape 111. By withdrawing the tape 111 from the cassette by means of the pins 62 and 63 in the manner described, two portions of leader tape 111 of substantially equal length are obtained. Subsequently, the second block 70 is pivoted back in the clockwise direction about the axis 74 to the position shown in Figure 4C. As is shown in Figure 3, this has the advantage that the movement of the leader tape 111 is limited owing to the special position of the pivotal axis 33 in the plane 75 between the pivotal axis 74 and the upper surface of the vacuum pad. In this way there is no risk that the position of the end portion of the leader tape on the vacuum pad 73 can be disturbed by forces acting in the longitudinal direction of the leader tape. In the position of the splicing table shown in Figure 4C the end of the right-hand length of leader tape 111 is now situated on the right-hand side on the pad 71, whilst the leading end of the magnetic tape 4 is still positioned on the pad 72. Subsequently, the mounting plate 92 to which the splicing device 25 is secured is moved downwards by the electronics of the apparatus. After this movement has been completed the punch 94 is urged downwards by the cylinder 95 to punch out a portion of the adhesive tape 97, which portion subsequently joins the ends of the magnetic tape 4 and the leader tape 111 to each other. During the downward movement of the punch 94 the vacuum channel in the punch is evacuated to hold the punched-out portion of adhesive tape on the punch during the movement towards the splicing table 68. During these movements the adhesive tape 97 is fed from the right-hand roller 96a to the left-hand roller 96b. In the next step the roller 105 is actuated by the piston rod 103 so that it is moved across the splicing table 98. As a result of this movement the adhesive-tape portion is pressed home, residual air between the tape ends to be joined and the adhesive-tape portion thus being removed. Now the mounting plate 92 is returned to the upper position. After this has been completed the cassette holder 32 can move back from the splicing position in the direction indicated by the arrow 116 to the winding position shown in full lines. During this movement the favourable position of the pivotal axis 33 also ensures that the left-hand part of leader tape 111 which is disposed on the vacuum pad 73 remains in the correct position. It is to be noted that the position of the pivotal axis 33 has the advantage that the pivotal movements in the direction indicated by the arrow 116 and in the direction indicated by the arrow 115 between the splicing position and the winding position can be performed in a comparatively short time. In this respect it is of advantage that as a result of the position of the pivotal axis 33 this movement can be limited, namely to such and extent that the punch 94 has enough clearance for the splicing operation.

Subsequently the control electronics actuate the alignment pin 81. Initially this pin occupies a rest position in the passage 64 as shown in Figure 5a, and owing to the pivotal movement of the lever 82 the alignment pin is now pivoted in the direction indicated by the arrow 117 in Figure 5a towards the position shown in Figure 5b. In this operating position the pin is positioned in such a manner relative to the front opening 66 of the cassette that in a stage to be described hereinafter, when the tape is wound in the tape is led directly from the guide portion 83 to the take-up reel 112 without any contact with other parts of the cassette. The semicircular cross-section of the alignment pin has the advantage that the pin can move freely inside the comparatively narrow opening 64 in the cassette from the rest position to the operating position. After this the vacuum of the vacuum pad 72 and the vacuum pad 71 is turned off. Subsequently, the housing 85 is moved forwards, the brake of the cassette is released by the pin 88 and the winding mandril 86 is again coupled to the take-up reel 112, the reel 112 then being positioned relative to the plane 75. After this the motor 87 is started and the magnetic tape 4 can be wound into the cassette 34. During winding of the magnetic tape the number of revolutions of the capstan 19 is measured, the control electronics causing winding to be stopped after a specific length of magnetic tape has been taken up. The next step is that vacuum is applied again to the stationary vacuum pad 71. After this the capstan 19 feeds in some additional centrimetres of magnetic tape 4. As a result of this the tape 4 is slackened at the location of the splicing table 68. In the next step the alignment pin 81 is returned from the operating position shown in Figure 5b to the rest position shown in Figure 5a. This step enables the yoke 67 with the pins 62 and 63 to be moved downwards again. After the pins have been moved downwards vacuum is applied to the vacuum pad 72. In this way the magnetic tape 4 is drawn onto the vacuum pad 72. After this the pull-out pins 62 and 73 can be moved upwards again. Once this has happened the housing 85 moves back in a direction opposite to that indicated by the arrow 114, so that the brake mechanism in the cassette is applied again and the reel 112 is disengaged from the winding mandril 86. Subsequently the cassette holder is pivoted into the oblique position as indicated by the arrow 115. Then the cutter 79 is actuated again, so that the magnetic tape 4 is severed. The leader tape on the vacuum pad 73 is aligned with the end portion of the magnetic tape 4 on the vacuum pad 71 by the pivotal movement of the second block 70 in an anti-clockwise direction. The next step is that in a manner as already described in the foregoing an adhesive-tape portion is applied by means of the punch 94, so that the left-hand portion of the leader tape 111 is connected to the end of the magnetic tape 4. After the return movement of the punch 94 the adhesive tape is pressed home by means of the roller 105. The mounting plate 92 is then moved upwards again. Subsequently, the cassette holder 32 is pivoted back to the winding position in the direction indicated by the arrow 116. After this the housing 85 is moved forwards again and the vacuum of the vacuum pads 71 and 73 is shut off. After this the remaining length of magnetic tape 4 to which the leader tape 111 is connected is wound onto the reel 112 by means of the winding mandril 86 after release of the brake mechanisms by means of the pin 88. Then the housing 85 is moved again. The cassette is now filled completely. The slide 31 and the cassette holder 32 are then moved back to the right, as indicated in Figure 2. Subsequently the projections 39 and 44 abut with the unlocking strips 42 and the seat 46 respectively, so that the cassette is released and can be removed from the cassette holder 32.

It is noted that the pivotal movement of the cassette holder 32, as shown in Figures 2 and 3, from the winding position to the splicing position in the direction indicated by the arrow 115 is effected under the influence of two springs 118, of which the right-hand spring is shown in Figure 2, which is possible only when the cylinder 58 is not activated. Each spring 118 has its left-hand end secured to the slide 31 and its right-hand end to an angled support 119 on the cassette holder 32. Furthermore, a set-screw 120 is provided on each corner support 119, which in the vertical position is in contact with the slide 31. Thus, by adjusting the set-screws 120 the cassette holder can be positioned accurately in the vertical position relative to the plane 75, thereby ensuring that the plane of symmetry of the reel 112 coincides with the plane 75.

## Claims

1. A method of filling a cassette (34) with a length of magnetic tape (4), comprising the following steps:
   - positioning a leading end of the magnetic tape (4) on a second vacuum pad (72) of a splicing table (68),
   - inserting a cassette (34) into a holder (32), said cassette having two hubs (112) arranged therein and having a length of leader tape (111) extending between said hubs (112) within the cassette (34),
   - withdrawing said length of leader tape (111) out of the cassette by an extraction member (67),
   - positioning said length of leader tape (111) on a first and third vacuum pad (71,73) of the splicing table (68), which first vacuum pad (71) is arranged on a stationary first block (69) of the splicing table (68) and which third vacuum pad (73) is in line with the first vacuum pad (71) and is together with the second vacuum pad (72) arranged on a second block (70) of the splicing table (68), which second block (70) is movable to bring the second and the third vacuum pad (72,73) alternatively into line with the first vacuum pad (71),

- cutting said leader tape (111) on the splicing table (68) into first and second leader tape parts,
- moving the second block (70) to bring the second vacuum pad (72) into line with the first vacuum pad,
- splicing said first leader tape part to the leading end of the magnetic tape (4) to be wound into the cassette (34),
- moving a tape guide (81) from a rest position free of contact with the tape (4) to an operating position for contacting the tape (4),
- winding said first leader tape part and a length of said magnetic tape (4), via said tape guide (81), onto a take-up hub (112) inside the cassette (34),
- terminating winding after said magnetic tape (4) has been wound to a location defining a trailing end,
- cutting said magnetic tape (4) at a selected point so as to form said trailing end,
- moving the second block (70) to bring the third vacuum pad (73) into line with the first vacuum pad (71),
- splicing said trailing end to said second leader tape part,
- winding said trailing end and said second leader tape part into the cassette (34), and
- discharging said cassette (34) from said holder (32),
  characterized
- in that moving the second block (70) is realised by pivoting the second block about a pivotal axis (74) of the second block (70),
- in that the method further includes the steps of pivoting the holder (32) with the cassette (34) from a second or splicing position, in which the holder (32) is inclined relative to the splicing table (68), about a pivotal axis (33) to a first position straight above the splicing table (68), which pivotal axis (33) is disposed at least substantially in a plane (75) containing both the pivotal axis (74) of the second block (70) and the central longitudinal axis of the first vacuum pad (71) and the pivotal axis (33) of the holder (32) extends at least substantially parallel to the pivotal axis (74) of the second block (70) between the last-mentioned axis (74) and the surface of the first vacuum pad (71),

- in that the method further includes the steps of pivoting the holder (32) from said first position to said second position before one of the steps of cutting and splicing is performed, and
- in that said operating position the tape guide (81) is aligned with respect to said cassette (34) such that during the subsequent winding step said tape (4) after leaving said tape guide (81) is fed directly to said take-up hub (112) within the cassette but without coming into contact with other parts of the cassette (34) and in that in its operating position during winding the tape guide (81) keeps the tape aligned relative to a plane of symmetry (75) of the cassette take-up hub (112).

2. A method as claimed in Claim 1, characterized in that the cassette (34) has a front cover system (55) and a passage (64) behind said front-cover system, in that after opening the front cover system (55) the tape guide (81) is positioned inside said passage (64) by pivoting the holder (32) from the second position to the first position before the step of moving the tape guide (81) from said rest position to said operating position is performed.

3. A method as claimed in Claim 2, characterized in that after the step of pivoting the holder (32) from the second position to the first position said tape guide (81) is pivoted freely inside said passage (64) from said rest position to said operating position for contacting the tape (4).

4. A method as claimed in Claim 2, characterized in that the extraction member (67) comprises pull-out pins (62, 63) which are positioned initially inside said passage (62) when the holder (32) is pivoted to the first position, in that during the step of withdrawing the leader tape (111) is withdrawn from the cassette (34) by said pull-out pins (62, 63) until the ends of the leader tape (111) on the hubs (112) are reached, in which position said pins (62, 63) are disposed one of each side of the splicing table (68), said pins (62, 63) enabling the leader tape (111) to be positioned on the splicing table (68) and subsequently to be cut into two parts having substantially the same length.

5. A method as claimed in Claim 4, characterized in that it further includes the step of moving said tape guide (81) from said operating position to said rest position after said magnetic tape (4) has been wound to said trailing end, and of moving said pull-out pins (62, 63) with the tape towards the splicing table to position the magnetic tape (4) on the splicing table (68).

6. An apparatus for carrying out the method of Claim 1, comprising:
   - a cassette holder (32) for holding the cassette (34) to be filled,
   - a splicing table for supporting a leading and a trailing end portion of the magnetic tape (4) and for supporting the leader tape (111) comprising a first vacuum pad (71) arranged on a stationary first block (69) of the splicing table (68) and a second and third vacuum pad (72,73) arranged on a second block (70) of the splicing table (68), which second block (70) is movable to bring the second and the third vacuum pad (72,73) alternatively into line with the first vacuum pad (71),
   - an extraction member (67) for drawing the length of leader tape (111) wound around the hubs (112) out of the cassette (34) and positioning the leader tape (111) on the splicing table (68),
   - a cutting device (77) for cutting the leader tape (111) into two portions and severing a length of magnetic tape (4) having both a leading end and a trailing end,
   - a splicing device (25) for splicing the leading and trailing ends of the magnetic tape (4) which are positioned on the splicing table (68) to the ends of the portions of leader tape (111) produced by the cutting device (77),
   - a winding device (86) for winding the length of magnetic tape (4) and leader tape (111) into the cassette (34) in cooperation with a take-up hub (112), and
   - a tape guide (81) for guiding the magnetic tape (4) during winding towards the cassette (34), said tape guide (81) being movable between a rest position free of contact with the tape and an operating position for contacting the tape,

characterized
   - in that the second block (70) is pivotable about a pivotal axis (74) of the second block (70),
   - in that the holder (32) with the cassette (34) is pivotable about a pivotal axis (33) from a second or splicing position, in which the holder (32) is inclined relative to the splicing table (68) to a first position straight above the splicing table (68), which pivotal axis (33) is disposed at least substantially in a plane (75) containing both the pivotal axis (74) of the second block (70) and the central longitudinal axis of the first vacuum pad (71) and the pivotal axis (33) of the holder (32) extends at least substantially parallel to the pivotal axis (74) of the second block (70) between the last-mentioned axis (74) and the surface of the first vacuum pad (71), and
   - in that said tape guide (81) is movable from said rest to said operating position so as to align a guide portion (83) of the tape guide in its operating position with respect to the take-up hub (112) of the cassette.

7. An apparatus as claimed in Claim 6, characterized in that the tape guide (81) is pivotable between said rest and operating positions and is semi-circular in radial cross-section.

8. An apparatus as claimed in Claim 7, characterized in that the tape guide (81) comprises a portion provided with a recess (84) for receiving a part of the cassette (34), said recessed portion adjoining said guide portion (83).

9. An apparatus as claimed in any of the Claim 6-8, characterized in that the cassette holder (32) comprises positioning means or positioning the cassette (34) in the holder, which positioning means comprise:
   - pressure elements (48) which urge a supporting surface of the cassette (34) against supporting members (35, 36) of the holder (32) and
   - locating pins (37) which position the cassette (34) in the holder (32).

10. An apparatus as claimed in Claim 9, characterized in that the cassette holder (32) is movable between a first or winding position and a second or splicing positon, adjustment means (120) are provided to adjust the cassette holder (32) and the cassette (34) in the first or winding position relative to the tape guide (81).

**Patentansprüche**

1. Verfahren zum Füllen einer Kassette (34) mit einer Magnetbandlänge (4), wobei dieses Verfahren die nachfolgenden Verfahrensschritte aufweist:

- das Anbringen eines Vorspannteils des Magnetbandes (4) auf einem zweiten Vakuumschuh (72) eines Klebetisches (68),

- das Einführen einer Kassette (34) in eine Halterung (32), wobei diese Kassette zwei in derselben angeordnete Aufwickelnaben (112) aufweist sowie eine Vorspannbandlänge (111) zwischen den genannten Naben (112) innerhalb der Kassette (34),

- das Zurückziehen der genannten Vorspannbandlänge (111) aus der Kassette mit Hilfe eines Zugelementes (67),

- das Positionieren der genannten Vorspannbandlänge (111) auf einem ersten und dritten Vakuumschuh (71, 73) des Klebetisches (68), wobei der erste Vakuumschuh (71) auf einem ortsfesten ersten Block (69) des Klebetisches (68) angeordnet ist und wobei der dritte Vakuumschuh (73) zu dem ersten Vakuumschuh (71) fluchtend liegt und zusammen mit dem zweiten Vakuumschuh (72) auf einem zweiten Block (70) des Klebetisches (68) angeordnet ist, wobei der zweite Block (70) beweglich ist, damit der zweite und der dritte Vakuumschuh (72, 73) abwechselnd zu dem ersten Vakuumschuh (71) in fluchtende Lage gebracht werden kann,

- das Schneiden des Vorspannbandes (111) auf dem Klebetisch (68) zu einem ersten und zweiten Vorspannbandteil,

- das Verschieben des zweiten Blocks (70), damit der zweite Vakuumschuh (72) mit dem ersten Vakuumschuh in fluchtende Lage gebracht wird,

- das Verkleben des genannten ersten Vorspannbandteils mit dem Vospannbandende des in die Kassete (34) einzuwikkelnden Magnetbandes (4),

- das Verschieben eines Bandführungselementes (81) aus einer Ruhelage ohne Kontakt mit dem Band (4) in eine Betriebslage zum Kontaktieren des Bandes (4),

- das Aufwickeln des ersten Vorspannbandteils und einer Bandlänge des genannten Magnetbandes (4) über das genannte Bandführungselement (81) auf eine Aufwickelnabe (112) innerhalb der Kassette (34),

- das Beenden des Aufwickelvorgangs, nachdem das genannte Magnetband (4) bis an eine ein Nachspannbandende bezeichnende Stelle aufgewickelt worden ist,

- das Schneiden des genannten Magnetbandes (4) an einer selektierten Stelle zum Bilden des genannten Nachspannbandendes,

- das Verschieben des zweiten Blocks (70), damit der dritte Vakuumschuh (73) zu dem ersten Vakuumschuh (71) in fluchtende Lage gebracht wird,

- das Verkleben des genannten Nachspannbandendes mit dem genannten zweiten Vorspannbandteil,

- das Aufwickeln des genannten Nachspannbandendes und des genannten zweiten Vorspannbandteils in die Kassette (34) hinein, und

- das Lösen der genannten Kassette (34) aus der genannten Halterung (32), dadurch gekennzeichnet, daß

- das Bewegen des zweiten Blocks (70) dadurch erfolgt, daß der zweite Block um eine Schwenkachse (74) des zweiten Blocks (70) geschwenkt wird,

- das Verfahren weiterhin die nachfolgenden Verfahrensschritte aufweist: das Schwenken der Halterung (32) mit der Kassette (34) aus einer zweiten Klebelage, in der die Halterung (32) sich gegenüber dem Klebetisch (68) in schräger Lage befindet, um eine Schwenkachse (33) in eine erste Lage unmittelbar über dem Klebetisch (68), wobei die Schwenkachse (33) wenigstens im wesentlichen in einer Ebene (75) vorgesehen ist, in der die Schwenkachse (74) des zweiten Blocks (70) sowie die zentrale Längsachse des ersten Vakuumschuhs (71) liegen, und wobei die Schwenkachse (33) der Halterung (32) sich wenigstens im wesentlichen parallel zu der Schwenkachse (74) des zweiten Blocks (70) zwischen der letztgenannten Achse (74) und der Flache des ersten Vakuumschuhs (71) erstreckt,

- das Verfahren weiterhin die nachfolgenden Verfahrensschritte aufweist: das Schwenken der Halterung (32) aus der genannten ersten Lage in die genannte zweite Lage, bevor einer der Verfahrensschritte Schneiden und Kleben durchgeführt ist, und

- die genannte Betriebslage des Bandführungselementes (81) gegenüber der genannten Kassette (34) derart ist, daß während des nachfolgenden Aufwickelvorgangs das genante Band (4) nach dem Verlassen des genannten Bandführungselementes (81) unmittelbar der genannten Aufwickelnabe (112) innerhalb der Kassette zugeführt wird, ohne jedoch mit den anderen Teilen der Kassette (34) in Kontakt gebracht zu werden, und daß das Bandführungselement (81) in der Betriebslage während des Aufwickelvorgangs das Band gegenüber einer Symmetrieebene (75) der Aufwickelnabe (112) der Kassette nach wie vor in ausgerichteter Lage hält.

2. Verfahren nach Anspruch 1, dadurch gekennzeichnet, daß die Kassette (34) ein Frontbedeckungssystem (55) und einen Durchgang (64) hinter diesem Frontbedeckungssystem aufweist, daß nach dem Öffnen des Frontbedeckungssystems (55) das Bandführungselement (81) in den genannten Durchgang (64) gebracht wird und zwar durch Schwenkung der Halterung (32) aus der zweiten Lage in die erste Lage bevor der Verfahrensschritt der Verschiebung des Bandführungselementes (81) aus der genannten Ruhelage in die genannte Betriebslage durchgeführt wird.

3. Verfahren nach Anspruch 2, dadurch gekennzeichnet, daß das genannte Bandführungselement (81) nach dem Verfahrensschritt der Schwenkung der Halterung (32) aus der zweiten Lage in die erste Lage innerhalb des genannten Durchgangs (64) aus der genannten Ruhelage in die genannte Betriebslage frei geschwenkt wird und zwar zum Kontaktieren des Bandes (4).

4. Verfahren nach Anspruch 2, dadurch gekennzeichnet, daß das Herausziehelement (67) Ausziehstifte (62, 63) aufweist, die sich anfangs innerhalb des genannten Durchgangs (62) befinden, wenn die Halterung (32) in die erste Lage geschwenkt wird, daß während des Zurückziehvorgangs der Vorspannband (111) durch die genannten Ausziehstifte (62, 63) aus der Kassette (34) herausgezogen wird, bis die Enden des Vorspannbandes (111) auf den Naben (112) erreicht worden sind, wobei in dieser Lage die genannten Stifte (62, 63) sich auf je einer Seite des Klebetisches (68) befinden, wobei die Stifte (62, 63) es ermöglichen, daß das Vorspannband (111) auf dem Klebetisch (68) ausgerichtet wird und darauf in zwei Teile nahezu gleicher Länge geschnitten wird.

5. Verfahren nach Anspruch 4, dadurch gekennzeichnet, daß das Verfahren weiterhin den Verfahrensschritt aufweist, bei dem das genannte Bandführungselement (81) aus der geannnten Betriebslage in die genannte Ruhelage gebracht wird, nachdem das genannte Magnetband (4) auf das genannte Nachspannbandende aufgewickelt ist, und den Verfahrensschritt, bei dem die genannten Ausziehstifte (62, 63) mit dem Band in Richtung des Klebetisches (68) bewegt wird um das Magnetband (4) auf dem Klebetisch (68) auszurichten.

6. Gerät zum Durchführen des Verfahrens nach Anspruch 1 mit:
   - einer Kassettenhalterung (32) zum Haltern der zu füllenden Kassette (34),
   - einem Klebetisch zum Unterstützen eines Vorspann- und Nachspannbandteils des Magnetbandes (4) und zum Unterstützen des Vorspannbandes (111), mit einem ersten Vakuumschuh (71) auf einem ortsfesten ersten Block (69) des Klebetisches (68) und mit einem zweiten und dritten Vakuumschuh (72, 73) auf einem zweiten Block (70) des Klebetisches (68), wobei dieser zweite Block (70) beweglich ist um den zweiten und den dritten Vakuumschuh (72, 73) wechselweise zu dem ersten Vakuumschuh (71) in fluchtende Lage zu bringen,
   - einem Herausziehelement (67) zum Herausziehen der um die Naben (112) gewickelten Vorspannbandlängen (111) aus der Kassette (34) und zum Ausrichten des Vorspannbandes (111) auf dem Klebetisch (68),
   - einer Schneidevorrichtung (77) zum Schneiden des Vorspannbandes (111) in zwei Teile und zum Abtrennen einer Magnetbandlänge (4) mit einem Vorspannbandende und einem Nachspannbandende,
   - einer Klebevorrichtung (25) zum Verkleben des Vorspann- und Nachspannbandendes des Magnetbandes (4) auf dem Klebetisch (68) mit den Enden der durch die Schneidevorrichtung (77) erhaltenen Teile des Vorspannbandes (111),
   - einer Wickelvorrichtung (86) zum in Zusammenarbeit mit der Aufwickelnabe (112) Aufwickeln der Magnetbandlänge (4) und des Vorspannbandes (111) in die Kassette (34), und
   - einem Bandführungselement (81) zum Führen des Magnetbandes (4) beim Aufwickeln in Richtung der Kassette (34), wobei dieses Bandführungselement (81) zwischen einer Ruhelage ohne Bandkontakt und einer Betriebslage zum Kontaktieren des Bandes beweglich ist, dadurch gekennzeichnet, daß

- der zweite Block (70) um eine Schwenkachse (74) des zweiten Blocks (70) schwenkbar ist,
- die Halterung (32) mit der Kassette (34) um eine Schwenkachse (33) aus einer zweiten oder Klebelage, in der die Halterung (32) sich gegenüber dem Klebetisch (68) in schräger Lage befindet, in eine erste Lage unmittelbar über dem Klebetisch (68) schwenkbar ist, wobei diese Schwenkachse (33) nahezu in einer Ebene (75) vorgesehen ist, in der sich die Schwenkachse (74) des zweiten Blocks (70) sowie die zentrale Längsachse des ersten Vakuumschuhs (71) befinden, und wobei die Schwenkachse (33) der Halterung (32) sich wenigstens nahezu parallel zu der Schwenkachse (74) des zweiten Blocks (70) zwischen der letztgenannten Achse (74) und der Fläche des ersten Vakuumschuhs (71) erstreckt, und
- das genannte Bandführungselement (81) aus der genannten Ruhelag in die genannte Betriebslage beweglich ist, damit ein Führungsteil (83) des Bandführungselementes in der Betriebslage gegenüber der Aufwickelnabe (112) der Kassette ausgerichtet wird.

7. Gerät nach Anspruch 6, dadurch gekennzeichnet, daß das Bandführungselement (81) zwischen einer Ruhelage und einer Betriebslage schwenkbar ist und im radialen Schnitt halbkreisförmig ist.

8. Gerät nach Anspruch 7, dadurch gekennzeichnet, daß das Bandführungselement (81) einen Teil mit einer Ausnehmung (84) zum Aufnehmen eines Teils der Kassette (34) aufweist, wobei dieser mit einer Ausnehmung versehene Teil an den genannten Führungsteil (83) grenzt.

9. Gerät nach einem der Ansprüche 6 - 8, dadurch gekennzeichnet, daß die Kassettenhalterung (32) Ausrichtmittel aufweist zum Ausrichten der Kassette (34) in der Halterung, wobei diese Ausrichtmittel die nachfolgenden Elemente aufweisen:

- Anpreßmittel (48), die eine Trägerfläche der Kassette (34) gegen die Trageelemente (35, 36) der Halterung (32) drücken und
- Ausrichtstifte (37), welche die Kassette (34) in der Halterung (32) ausrichten.

10. Gerät nach Anspruch 9, dadurch gekennzeichnet, die Kassettenhalterung (32) zwischen einer ersten oder Wickellage und einer zweiten oder Schneidelage beweglich ist, wobei Einstellmittel (12) vorgesehen sind zum Einstellen der Kassettenhalterung (32) und der Kassette (34) in der ersten oder Aufwickellage gegenüber dem Bandführungselement (81).

## Revendications

1. Procédé de remplissage d'une cassette (34) avec une longueur de bande magnétique (4), comprenant les étapes suivantes :

- positionner une extrémité antérieure de la bande magnétique (4) sur un deuxième patin à dépression (72) d'une table de raboutage (68),
- introduire une cassette (34) dans un support (32), la cassette contenant deux moyeux (112) et comportant une longueur de bande amorce (111) qui s'étend entre les moyeux (112), dans la cassette (34),
- retirer la longueur de bande amorce (111) hors de la cassette au moyen d'un organe d'extraction (67),
- positionner la longueur de bande amorce (111) sur un premier et un troisième patin à dépression (71, 73) de la table de raboutage (68), le premier patin à dépression (71) étant disposé sur un premier bloc fixe (69) de la table de raboutage (68) et le troisième patin à dépression (73) étant en ligne avec le premier (71) et étant, conjointement avec le deuxième patin à dépression (72), disposé sur un second bloc (70) de la table de raboutage (68), ce second bloc (70) étant mobile pour amener le deuxième et le troisième patin à dépression (72, 73) alternativement en ligne avec le premier patin à dépression (71),
- couper la bande amorce (111) sur la table de raboutage (68) en une première et une seconde partie de bande amorce,
- déplacer le second bloc (70) pour amener le deuxième patin à dépression (72) en ligne avec le premier patin à dépression,
- rabouter la première partie de bande amorce à l'extrémité antérieure de la bande magnétique (4) à envider dans la cassette (34),
- déplacer un guide de bande (81) d'une position de repos hors de contact d'avec la bande (4) vers une position de travail en contact avec la bande (4),

- bobiner la première partie de bande amorce et une longueur de la bande magnétique (4), par l'intermédiaire du guide de bande (81), sur un moyeu d'envidage (112) à l'intérieur de la cassette (34),
- terminer le bobinage après que la bande magnétique (4) a été envidée jusqu'à un endroit définissant une extrémité postérieure,
- couper la bande magnétique (4) à un point choisi de manière à former l'extrémité postérieure,
- déplacer le second bloc (70) pour amener le troisième patin à dépression (73) en ligne avec le premier patin à dépression (71),
- rabouter l'extrémité postérieure à la seconde partie de bande amorce,
- bobiner l'extrémité postérieure et la seconde partie de bande amorce dans la cassette (34), et
- enlever la cassette (34) du support (32), caractérisé :
- en ce que le déplacement du second bloc (70) est réalisé par le pivotement de ce second bloc autour d'un axe de pivotement (74) qui lui est propre,
- en ce que le procédé comprend, en outre, les opérations consistant à faire pivoter le support (32) avec la cassette (34) à partir d'une seconde position ou position de raboutage dans laquelle le support (32) est incliné par rapport à la table de raboutage (68), autour d'un axe de pivotement (33) vers une première position située juste au-dessus de la table de raboutage (68), l'axe de pivotement (33) étant disposé au moins en substance dans un plan (75) contenant à la fois l'axe de pivotement (74) du second bloc (70) et l'axe longitudinal central du premier patin à dépression (71), et l'axe de pivotement (33) du support (32) s'étend au moins en substance parallèlement à l'axe de pivotement (74) du second bloc (70), entre l'axe mentionné en dernier lieu (74) et la surface du premier patin à dépression (71),
- en ce que le procédé comprend, en outre, les opérations consistant à faire pivoter le support (32) à partir de la première position vers la seconde position avant qu'une des opérations de coupe et de raboutage soit exécutée, et
- en ce que, dans la position de fonctionnement, le guide de bande (81) est aligné per rapport à la cassette (34) de telle sorte que, pendant l'opération de bobinage ultérieure, la bande (4), après avoir quitté le guide de bande (81), est amenée directement au moyeu d'envidage (112) dans la cassette mais sans venir en contact avec d'autres parties de la cassette (34) et en ce que, dans sa position de fonctionnement, pendant le bobinage, le guide de bande (81) maintient la bande alignée par rapport à un plan de symétrie (75) du moyeu d'envidage de la cassette (112).

2. Procédé suivant la revendication 1, caractérisé en ce que la cassette (34) comporte un système de volets antérieurs (55) et un passage (64) derrière le système de volets antérieurs, en ce qu'après l'ouverture du système de volets antérieurs (55), le guide de bande (81) est positionné à l'intérieur du passage (64) par pivotement du support (32) à partir de la seconde position vers la première position avant que l'opération impliquant le déplacement du guide de bande (81) de la position de repos vers la position de fonctionnement soit exécutée.

3. Procédé suivant la revendication 2, caractérisé en ce qu'après l'opération de pivotement du support (32) de la seconde position vers la première, le guide de bande (81) pivote librement à l'intérieur du passage (64) à partir de la position de repos vers la position de fonctionnement pour entrer en contact avec la bande (4).

4. Procédé suivant la revendication 2, caractérisé en ce que l'organe d'extraction (67) comprend des broches de tirage (62, 63) qui sont positionnées initialement à l'intérieur du passage (62) lorsque le support (32) est amené par pivotement dans sa première position, que, pendant l'opération d'extraction, la bande amorce (111) est retirée de la cassette (34) par les broches de tirage (62, 63) jusqu'à ce que les extrémités de la bande amorce (111) sur les moyeux (112) soient ateintes et que, dans cette position, les broches (62, 63) sont disposées à raison d'une de chaque côté de la table de raboutage (68), ces broches (62, 63) permettant de positionner la bande amorce (111) sur la table de raboutage (68) et permettant ultérieurement de la couper en deux parties de longueurs en substance égales.

5. Procédé suivant la revendication 4, caractérisé en ce qu'il comprend, en outre, l'opération consistant à déplacer le guide de bande (81)

14

de la position de fonctionnement vers la position de repos après que la bande magnétique (4) a été bobinée jusqu'à l'extrémité postérieure, et à déplacer les broches de tirage (62, 63) avec la bande vers la table de raboutage pour positionner la bande magnétique (4) sur la table de raboutage (68).

6. Appareil pour exécuter le procédé suivant la revendication 1, comprenant :
   - un support de cassette (32) pour retenir la cassette (34) à remplir,
   - une table de raboutage pour supporter une partie d'extrémité antérieure et une partie d'extrémité postérieure de la bande magnétique (4) et pour supporter la bande amorce (111), comprenant un premier patin à dépression (71) disposé sur un premier bloc fixe (69) de la table de raboutage (68) et un deuxième ainsi qu'un troisième patin à dépression (72, 73) disposés sur un second bloc (70) de la table de raboutage (68), le second bloc (70) étant mobile pour amener le deuxième et le troisième patin à dépression (72, 73) alternativement en ligne avec le premier patin à dépression (71),
   - un organe d'extraction (67) pour tirer la longueur de bande amorce (111) bobinée autour des moyeux (112) hors de la cassette (34) et pour positionner la bande amorce (111) sur la table de raboutage (68),
   - un dispositif sectionneur (77) pour couper la bande amorce (111) en deux parties et pour sectionner une longueur de bande magnétique (4) comportant une extrémité antérieure et une extrémité postérieure,
   - un dispositif de raboutage (25) pour rabouter les extrémités antérieure et postérieure de la bande magnétique (4) qui sont positionnées sur la table de raboutage (68) aux extrémités des parties de bande amorce (111) produites par le dispositif sectionneur (77),
   - un dispositif de bobinage (86) pour bobiner la longueur de bande magnétique (4) et de bande amorce (111) dans la cassette (34) en coopération avec un moyeu envideur (112), et
   - un guide de bande (81) pour guider la bande magnétique (4) pendant le bobinage vers la cassette (34), le guide de bande (81) étant mobile entre une position de repos hors de contact avec la bande et une position de travail en contact avec la bande,

caractérisé :
   - en ce que le second bloc (70) peut pivoter autour d'un axe de pivotement (74) qui lui est propre,
   - en ce que le support (32), avec la cassette (34), peut pivoter autour d'un axe de pivotement (33) à partir d'une seconde position ou position de raboutage dans laquelle le support (32) est incliné par rapport à la table de raboutage (68) vers une première position qui est située juste au-dessus de la table de raboutage (68), cet axe de pivotement (33) étant disposé au moins en substance dans un plan (75) contenant à la fois l'axe de pivotement (74) du second bloc (70) et l'axe longitudinal central du premier patin à dépression (71), et l'axe de pivotement (33) du support (32) s'étend au moins en substance parallèlement à l'axe de pivotement (74) du second bloc (70), entre l'axe (74) mentionné en dernier lieu et la surface du premier patin à dépression (71), et
   - en ce que le guide de bande (81) est mobile à partir de la position de repos vers la position de travail de manière à aligner une partie de guidage (83) du guide de bande dans sa position de travail par rapport au moyeu envideur (112) de la cassette.

7. Appareil suivant la revendication 6, caractérisé en ce que le guide de bande (81) peut pivoter entre la position de repos et la position de travail et est semi-circulaire en coupe transversale radiale.

8. Appareil suivant la revendication 7, caractérisé en ce que le guide de bande (81) comprend une partie pourvue d'un évidement (84), destiné à recevoir une partie de la cassette (34), la partie évidée étant adjacente à la partie de guidage (83).

9. Appareil suivant l'une quelconque des revendications 6 à 8, caractérisé en ce que le support de cassette (32) comprend des moyens positionneurs pour positionner la cassette (34) dans le support, ces moyens positionneurs comprenant :
   - des éléments presseurs (48) qui sollicitent une surface de support de la cassette (34) contre des organes de soutien (35, 36) du support (32), et
   - des ergots positionneurs (37) qui positionnent la cassette (34) dans le support (32).

10. Appareil suivant la revendication 9, caractérisé en ce que le support de cassette (34) est mobile entre une première position ou position de bobinage et une seconde position ou position de raboutage, des moyens de réglage (120) sont prévus pour ajuster le support de cassette (32) et la cassette (34) dans la première position ou position de bobinage par rapport au guide de bande (81).

FIG. 1

FIG. 2

FIG.3

A

B

C

D

FIG.4

FIG. 5 A

FIG. 5 B